Europäisches Patentamt

(19) European Patent Office

Office européen des brevets

(11) Publication number: **0 094 520**
**B1**

(12) **EUROPEAN PATENT SPECIFICATION**

(45) Date of publication of patent specification: **08.07.87**

(51) Int. Cl.⁴: **F 16 B 7/04**

(21) Application number: **83103910.2**

(22) Date of filing: **21.04.83**

(54) **Device for locking two members.**

(30) Priority: **14.05.82 SE 8203018**

(43) Date of publication of application:
**23.11.83 Bulletin 83/47**

(45) Publication of the grant of the patent:
**08.07.87 Bulletin 87/28**

(84) Designated Contracting States:
**AT BE CH DE FR GB IT LI LU NL SE**

(56) References cited:
**GB-A-1 309 492**
**GB-A-1 435 312**
**GB-A-2 077 837**

(73) Proprietor: **Höiseth, John Willy**
**Ottebol**
**S-671 00 Arvika (SE)**

(72) Inventor: **Höiseth, John Willy**
**Ottebol**
**S-671 00 Arvika (SE)**

(74) Representative: **Hynell, Magnus**
**Hynell Patenttjänst AB Box 236**
**S-683 02 Hagfors (SE)**

Courier Press, Leamington Spa, England.

## Description

### Field of Invention

The invention relates to a device for locking together two members which in the neutral position of the device are telescopically movable in relation to each other with a given clearance between the two members, for example a rod or a tube inside an outer tube or a rod or a tube inside an outer sleeve, wherein means are provided for applying in locking from outside a force in such a manner that the inner member is locked in the area of application of force and on the other hand, the inside of the outer member, and wherein, in an annular recess in the area of the inside of the member, there is fitted a locking means, the external dimensions of which are smaller than the external dimensions of the recess, so that the locking means is movable in radial direction in the recess.

### Prior Art

Many different devices are known for locking two members which in the neutral position are telescopically movable in relation to each other, ranging from simple screw joints, pin and socket joints, keyed joints, etc., to sophisticated joints based on expanding clamping means and the like. Common to the first mentioned joints, e.g. the device disclosed in the British patent specification No. 1 309 492, is the characteristic of being simple and cheap, but not completely reliable, since a considerable force must be applied upon the locking means provided in the device in order that a sufficient security shall be obtained. This also means that the device rather soon can be worn out, if the device is frequently locked and released. Further these deficiencies also imply that the device has a limited field of application. As far as the other, more sophisticated joints are concerned on the other hand, these joints are expansive and complicated, but still not always reliable. Furthermore, also in many of these rather expansive devices considerable damage to one or both of the members to be joined is assumed.

### Disclosure of the Invention

The object of the invention is to provide a device which is both simple and cheap, but at the same time very reliable. To be more specific, the object is to provide a device which joins by friction locking two members telescopically movable in relation to each other without damage to either of the members in conjunction with the locking process.

In addition it is an object of the invention to provide a device which can be utilised in both very small and very large structures and in widely different technical fields in which the stop position of the members in relation to each other must be adjustable. Conceivable areas of application are for example in nursing equipment various kinds of stands, machine assembly, supporting members for furniture and carriage seats, scaffolding etc.

These and other objectives of the invention may be satisfied therein that the locking means is a sleeve, that the clearance between the sleeve and the inside of the outer member in the area of the recess is greater than the clearance between the sleeve and the inner member, that the inner member extends through said sleeve, and that the sleeve may be displaced radially in said recess and forced against the inner member to lock the inner member between, on one hand, the inside of the sleeve and, on the other hand, on both sides of the recess.

The cross sections of the two members to be locked together and the sleeve may be circular or polygonal, and other shapes are conceivable provided that the members and the sleeve are movable in radial direction with the above-mentioned clearance in order to effect the desired locking.

The force required to effect the locking can be obtained by conventional means as for example screws, wedges, lever aggregates, hydraulic and pneumatic pistons, etc.

Further characteristics and advantages of the invention will appear from the following claims and from the following description of some embodiments.

### Brief Description of the Drawings

In the following description of some chosen embodiments reference is made to attached drawings in which

Fig. 1 shows a locking device which can be moved backwards and forwards on a rod, for example a machine stopper,

Fig. 2 shows the same device on a smaller scale,

Fig. 3 shows a locking device running on a fixed rod, for example a stand for photo equipment.

Fig. 4 shows how the stopper according to Fig. 1 can be used for adjusting an outer tube at a desired height,

Fig. 5 shows a locking device in which a lower tube is part of a stand and a rod can be adjusted at various heights.

Fig. 6 shows an alternative embodiment of the device according to Fig. 5.

### Description of Preferred Embodiments

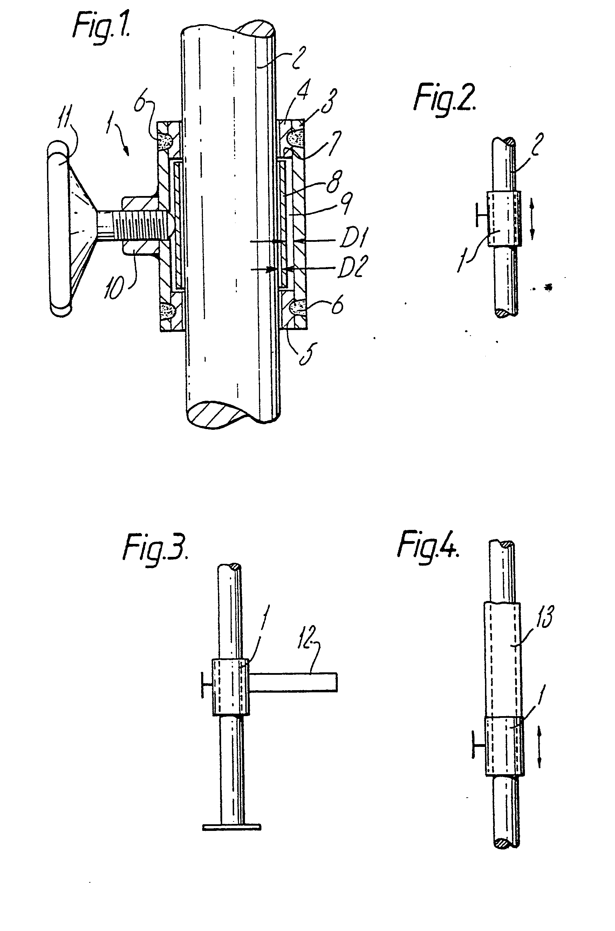

With reference first to Fig. 1, a locking device is generally designated 1. The latter constitutes at the same time the outer one of the two members to be locked according to the invention. A cylindrical rod 2 constitutes the second member. According to the embodiment the locking device/member consists of an outer tube 3 and, in that tube at the ends of it, a pair of cylindrical running rings 4 and 5 the external dimensions of which correspond to the internal dimensions of the tube 3. The running rings 4 and 5 are joined to the tube 3 by welds 6. Alternatively, they can for example be pressed on, stamped on, glued on, or screwed on inside the tube 3. Thus is obtained in the member 1 a recess 7 inside the tube 3 between the running rings 4 and 5. In the recess 7 is provided a metal sleeve, conveniently of steel, of a thinner wall thickness than the rings 4 and 5. The internal diameter of the sleeve 8 is the same as that of the rings 4 and 5 or somewhat larger, whilst the external diameter of the sleeve 8 is smaller than the internal diameter of the outer tube 3, i.e. smaller than the internal diameter of the member 1 in the area of the recess 7. Thus, when the sleeve 8 is co-axial with the device 1, there is formed a gap 9 between the sleeve 8 and the outer tube 3. This gap 9 constituting the clearance of the sleeve 8 in the recess 7 is designated D1. The outer sleeve or tube 3 is provided with a welded-on connecting piece 10 having a screw 11 by means of which the sleeve 8 can be displaced in radial direction in the recess 7.

Through the member 1 extends the second member i.e. the rod 2. In the free fit position the latter is able to run in the device 1 with a given clearance. The clearance between the rod 2 and the locking sleeve 8 is designated D2. According to the invention, locking is obtained if D1 > D2, the locking sleeve 8 being forced against the rod 2, when the screw 11 is tightened, until the opposite side of the rod collides with the running rings 4 and 5, provided that D1 > D2, in such a manner that the locking sleeve 8 can be displaced freely in the recess 7 on the side of the device which is opposite to the screw 11. Thus locking occurs by jamming between on one side the locking sleeve 8 on the side of the screw 11 and on the other side the two running rings 4 and 5.

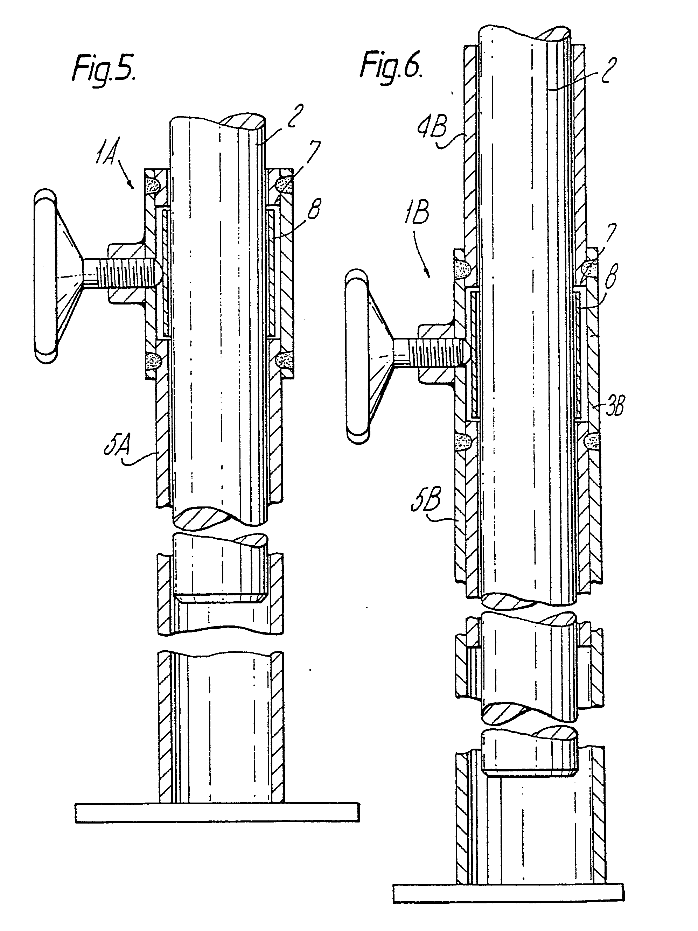

Figures 2, 3 and 4 show some examples of embodiment of the invention according to Fig. 1. Fig. 2 illustrates the basic construction diagrammatically in the same way as Fig. 1. According to Fig. 3, the locking device 1 is provided with a device 12 which may consist of a suspension device, a plate etc. According to Fig. 4, the device 1 is used as a stopper or check piece for the upper movable tube 13.

In the embodiment according to Fig. 5, with reference to Fig. 1, the lower ring 5 is replaced by a tube 5A which constitutes part of a stand. The locking device is in this case designated 1A and is otherwise shaped in the same way as according to Fig. 1.

Fig. 6 differs from the embodiment according to Fig. 1 in that the two running rings are extended and form guide sleeves 4B and 5B. In this case the locking device is designated 1B. The outer tube 3B is in this case part of a stand. Otherwise the device 1B is shaped in the same way as in preceding embodiments.

## Claims

1. Device for locking together two members (1, 2) which in the neutral position of the device are telescopically movable in relation to each other with a given clearance between the two members, for example a rod (2) or a tube inside an outer tube or a rod or a tube inside an outer sleeve (1), wherein means (11) are provided for applying in locking from outside a force in such a manner that the inner member (2) is locked in the area of application of force and on the other hand, the inside of the outer member (1), and wherein, in an annular recess (7) in the area of the inside of the outer member (1), there is fitted a locking means (8), the external dimensions of which are smaller than the external dimensions of the recess, so that the locking means is movable in radial direction in the recess, characterized in that the locking means is a sleeve (8), that the clearance (D1) between this locking sleeve (8) and the inside of the outer member in the area of the recess is greater than the clearance (D2) betwen the locking sleeve (8) and the inner member (2), that the inner member (2) extends through said locking sleeve (8), and that the locking sleeve (8) may be displaced radially in said recess and forced against the inner member to lock the inner member between, on one hand, the inside of the locking sleeve (8) and, the inside of the outer member on the other hand, on both sides (4, 5) of the recess (7).

2. Device according to claim 1, characterized in that the internal measurements of the sleeve (8) are essentially the same or somewhat larger than those of the first member (2).

3. Device according to claim 1 or 2, characterized in that the cross sections of the two members (1, 2) and the locking sleeve (8) are circular.

4. Device according to claims 1 or 2, characterized in that the cross sections of the two members and the locking sleeve are polygonal.

5. Device according to any of claims 1—4, characterized in that the recess (7) consists of a space inside a sleeve (3), tube, or similar cylindrical member, between two rings (4, 5) inside said cylindrical member which rings are joined to the cylindrical member by for example welding, glueing, or screwing.

6. Device according to any of the claims 1—5, characterized in that the internal diameter of the outer member (1) in the area (4, 5) on both sides of the recess (7) is the same or somewhat smaller than that of the locking sleeve (8).

## Patentansprüche

1. Vorrichtung zum Blockieren von zwei Bauteilen (1, 2), die in der Ruhestellung der Vorrichtung bei einem gegebenen Spielraum zwischen den zwei Bauteilen, beispielsweise einer Stange (2) oder einem Rohr in einem Aussenrohr oder einer Stange oder einem Rohr in einer Aussenmuffe (I), im Verhältnis zueinander ineinander verschiebbar sind, wobei Mittel (11) vorgesehen sind, um beim Blockieren eine Kraft so von aussen anzulegen, dass im Bereich der Kraftanlegung der innere Bauteil (2) und anderseits die Innenseite des äusseren Bauteils (1) blockiert ist, und wobei in einer ringförmigen Ausnehmung (7) im Bereich der Innenseite des äusseren Bauteils (1) ein Blockiermittel (8) angebracht ist, dessen Aussenabmessungen kleiner als die Aussenabmessungen der Ausnehmung sind, so dass das Blockiermittel in radialer Richtung der Ausnehmung bewegbar ist, dadurch gekennzeichnet, dass das Blockiermittel eine Muffe (8) ist, dass der Spielraum (D1) zwischen dieser Blockiermuffe (8) und der Innenseite des äusseren Bauteils im Bereich der Ausnehmung grösser ist als der Spielraum (D2) zwischen der Blockiermuffe (8) und dem inneren Bauteil (2), dass sich der innere Bauteil (2) durch die besagte Blockiermuffe (8) hindurch erstreckt, und dass die Blockiermuffe (8) radial in der besagten Ausnehmung verschoben werden und an den inneren Bauteil angepresst werden kann, um den inneren Bauteil zwischen einerseits der Innenseite der Blockiermuffe (8) und andererseits der Innenseite des äusseren Bauteils auf beiden Seiten (4, 5) der Ausnehmung (7) zu verriegeln.

2. Vorrichtung nach Anspruch 1, dadurch gekennzeichnet, dass die Innenabmessungen der Muffe (8) im wesentlichen dieselben oder etwas grösser als die des ersten Bauteils (2) sind.

3. Vorrichtung nach Anspruch 1 oder 2, dadurch gekennzeichnet, dass die Querschnitte der beiden Bauteile (1, 2) und der Blockiermuffe (8) kreisförmig sind.

4. Vorrichtung nach Ansprüchen 1 oder 2, dadurch gekennzeichnet, dass die Querschnitte der beiden Bauteile und der Blockiermuffe vieleckig sind.

5. Vorrichtung nach einem der Ansprüche 1 bis 4, dadurch gekennzeichnet, dass die Ausnehmung (7) aus einem Raum in einer Muffe (3), einem Rohr oder ähnlichem zylindrischen Bauteil zwischen zwei Ringen (4, 5) im besagten zylindrischen Bauteil besteht, wobei die Ringe zum Beispiel durch Verschweissen, Verkleben, oder Verschrauben mit dem zylindrischen Bauteil verbunden sind.

6. Vorrichtung nach einem der Ansprüche 1 bis 5, dadurch gekennzeichnet, dass der Innendurchmesser des äusseren Bauteils (1) im Bereich (4, 5) beidseitig der Ausnehmung (7) der gleiche oder etwas kleiner als der der Blockiermuffe (8) ist.

## Revendications

1. Dispositif pour bloquer ensemble deux éléments (1, 2) qui, dans la position neutre du dispositif, sont mobiles de manière télescopique l'un par rapport à l'autre, un jeu donné étant prévu entre les deux éléments, par exemple une tige (2) ou un tube à l'intérieur d'un tube extérieur, ou une tige ou un tube à l'intérieur d'un fourreau extérieur (1) dans lequel des moyens (11) sont prévus pour, à des fins de blocage, exercer de l'extérieur une force d'une manière telle que l'élément intérieur (2) soit bloqué dans la zone d'application de la force et, d'autre part, à l'intérieur de l'élément extérieur (1), et dans lequel, dans un évidement annulaire (7) prévu dans la zone de l'intérieur de l'élément extérieur (1), est prévu un moyen de blocage (8) dont les dimensions externes sont inférieures aux dimensions externes de l'évidement, de sorte que le moyen de blocage est mobile dans un sens radial dans l'évidement, caractérisé en ce que le moyen de blocage est une douille (8), que le jeu (D1) entre cette douille de blocage (8) et l'intérieur de l'élément extérieur dans la zone de l'évidement est supérieur au jeu (D2) entre la douille de blocage (8) et l'élément intérieur (2), que l'élément intérieur (2) s'étend à travers la douille de blocage (8) et que la douille de blocage (8) peut être déplacée radialement dans l'évidement et être pressée contre l'élément intérieur pour bloquer l'élément intérieur entre d'une part, l'intérieur de la douille de blocage (8) et, d'autre part, l'intérieur de l'élément extérieur, des deux côtés (4, 5) de l'évidement (7).

2. Dispositif suivant la revendication 1, caractérisé en ce que les mesures internes de la douille (8) sont essentiellement égales à celles du premier élément (2) ou légèrement supérieures à celles-ci.

3. Dispositif suivant la revendication 1 ou 2, caractérisé en ce que les sections transversales des deux éléments (1, 2) et de la douille de blocage (8) sont circulaires.

4. Dispositif suivant la revendication 1 ou 2, caractérisé en ce que les sections transversales des deux éléments et de la douille de blocage sont polygonales.

5. Dispositif suivant l'une quelconque des revendications 1 à 4, caractérisé en ce que l'évidement (7) est formé d'un espace prévu à l'intérieur d'une douille (3), d'un tube ou d'un élément cylindrique semblable, entre deux bagues (4, 5) à l'intérieur de l'élément cylindrique, cette bague étant reliée à l'élément cylindrique, par exemple par soudage, par collage ou par vissage.

6. Dispositif suivant l'une quelconque des revendications 1 à 5, caractérisé en ce que le diamètre intérieur de l'élément extérieur (1) dans la zone (4, 5) des deux côtés de l'évidement (7) est le même que celui de la douille de blocage (8) ou est légèrement inférieur à celui-ci.

0 094 520

Fig.1.

Fig.2.

Fig.3.

Fig.4.

1

Fig.5.

Fig.6.